# EUROPÄISCHE PATENTSCHRIFT

(11) **EP 2 220 207 B1**
(45) Veröffentlichungstag und Bekanntmachung des Hinweises auf die Patenterteilung: **29.08.2012**
(21) Anmeldenummer: 08862122.2
(22) Anmeldetag: 13.11.2008
(51) Int. Cl.: C12C 13/02

(54) **VORRICHTUNG UND VERFAHREN ZUM KONTINUIERLICHEN WÜRZEKOCHEN**
APPARATUS AND METHOD FOR CONTINUOUS WORT BOILING
DISPOSITIF ET PROCÉDÉ DE CUISSON DU MOÛT EN CONTINU

(30) Priorität: 14.12.2007 DE 102007060391
(43) Veröffentlichungstag der Anmeldung: 25.08.2010
(73) Patentinhaber: Krones AG, 93073 Neutraubling (DE)
(72) Erfinder: WASMUHT, Klaus, Karl, 91792 Ellingen (DE); FOLZ, Cornelia, 13353 Berlin (DE)
(74) Vertreter: Grünecker, Kinkeldey, Stockmair & Schwanhäusser
(86) Internationale Anmeldenummer: PCT/EP2008/009599
(87) Internationale Veröffentlichungsnummer: WO 2009/077042

(56) Entgegenhaltungen:
- EP-A1- 2 209 882
- WO-A-02/12433
- WO-A-95/26395
- DE-A1- 2 725 758
- DE-C1- 19 828 686
- DE-U1-202005 020 713
- GB-A- 982 923
- US-A- 3 423 840
- US-A- 3 535 116
- US-A- 4 455 282

## Beschreibung

Die Erfindung betrifft eine Vorrichtung oder ein Verfahren zum kontinuierlichen Würzekochen.

Die Druckschrift DE 198 28 686 C1 zeigt bereits ein Gefäß zur Behandlung von Würze bei der Bierherstellung, betrifft jedoch keinen kontinuierlichen Würzekochprozess im Sinne dieser Anmeldung. Es gibt einen einzigen beheizten Konus, der zum Aufheizen der Würze dienen kann. Diese Druckschrift beschreibt nur einen herkömmlichen Batchbetrieb, d.h. dass die Würze chargenweise gekocht wird.

Aus der Druckschrift US 3 423 840 ist die Behandlung von Feststoffmaterial im Gegenstrom mit Gasen beschrieben. Dazu befinden sich in einem Turm kaskadenartig übereinanderliegende Leitbleche. Diese Leitbleche sind aber nicht beheizt. Diese Druckschrift zeigt keine konisch zulaufenden Heizflächen und auch keine entsprechenden Leiteinrichtungen, die einen Flüssigkeitsstrom solchen Heizflächen zuführen könnten. Diese Vorrichtung ist nicht dazu geeignet, Flüssigkeiten zu erhitzen.

Aus der US 4 455 282 ist bereits die Aufbereitung von Feststoffmaterial bekannt. Diese Vorrichtung ist nicht geeignet zum kontinuierlichen Würzekochen.

Bislang erfolgt der Sudhausprozess zur Herstellung im sogenannten "Batchverfahren". Pro Tag sind etwa bis zu 14 Sude erreichbar. Dieses Verfahren erzeugt hohe Energiespitzen und fordert dadurch die Bereitstellung großer Versorgungskapazitäten. Aufgrund von Rüstzeiten zwischen den einzelnen Fertigungsstufen ergibt sich ein nur begrenzter Wirkungsgrad der Anlagen. Insgesamt führt der Batchbetrieb zu hohen Investitionskosten der Anlagen als auch der Gebäudetechnik.

Bislang wurde beim Würzekochen jeweils ein kompletter Sud der Würzepfanne zum Kochen zugeführt. Nach dem Kochen wurde der gesamte Sud aus der Würzepfanne geleitet. Nach einer Rüstzeit von 30-60 min. konnte dann der nächste Sud der Würzepfanne zugeführt werden.

Hiervon ausgehend liegt der vorliegenden Erfindung die Aufgabe zugrunde, eine verbesserte Vorrichtung und ein verbessertes Verfahren zum Würzekochen bereitzustellen, die einfach zu realisieren sind, und die ein kontinuierliches Würzekochen ermöglichen.

Erfindungsgemäß wird diese Aufgabe durch die Merkmale der Ansprüche 1 und 8 erreicht. Unter kontinuierlich ist hier zu verstehen, dass anders als im Stand der Technik nach Behandlung eines Batches, keine Unterbrechung des Verfahrens erfolgt. Über einen langen Zeitraum, der die Dauer eines entsprechenden, herkömmlichen Prozesses im Batchbetrieb um ein Mehrfaches übersteigt, wird gemäß der vorliegenden Erfindung beim Würzekochen ein bestimmter Massestrom zu- und gleichzeitig abgeführt. Der Würzekochprozess kann demnach bei im Wesentlichen konstanter Prozessmenge pro Zeit durchgeführt werden. Durch Wegfallen der Rüstzeiten zwischen den Batches ergibt sich eine bessere Auslastung der Anlage und somit ein höherer Wirkungsgrad.

Es ist vorteilhaft, wenn der Druck in der Vorrichtung einstellbar ist. Somit kann eine optimale Prozessführung sichergestellt werden.

Dadurch, dass die Heizflächen im Wesentlichen konisch zulaufen und übereinander angeordnet sind, kann eine große Heizoberfläche relativ zu einem Gehäusedurchmesser gewährleistet werden, so dass der Würzestrom ausreichend mit Energie versorgt werden kann.

Unter im wesentlichen konisch ist zu verstehen, dass die Fläche von einer umlaufenden Grundkante aus nach oben ,oder nach unten, zusammenläuft. Die umlaufende Grundkante muss nicht kreisförmig sein, sondern kann auch eine polygone Form aufweisen.

Über die entsprechenden Leiteinrichtungen kann dann die Würze von einer Heizfläche zur darunter liegenden Heizfläche geleitet werden, bis sie schließlich über einen Würzeablauf beispielsweise zur Heißtrubabscheidung abgeleitet wird. Indem die Würze von oben nach unten durch den Tower rinnt, wird garantiert, dass jedes Teilchen der Würze den gleichen - zeitlich wie auch mengenmäßig- thermischen Notwendigkeiten eines Kochprozesses ausgesetzt ist. Somit ergibt sich insbesondere auch ein schonenderes Verfahren, das wiederum in einer höheren Würzequalität resultiert. Weiter kann die Prozesszeit im Vergleich zum herkömmlichen Würzekochen deutlich reduziert werden.

Vorteilhafterweise sind mindestens 2 Heizflächen übereinander angeordnet. Es können bis zu 20 Heizflächen übereinander angeordnet werden. Es ist möglich, dass auch die Leiteinrichtung beheizbar ist. Die Leiteinrichtung kann dann beispielsweise auch als konisch zulaufende Fläche ausgebildet sein, so dass der Platz in der Vorrichtung effektiv genutzt werden kann.

Es ist auch möglich, dass ein Würzekochsystem vorgesehen wird, bei dem mindestens zwei erfindungsgemäße Vorrichtungen in Reihe geschaltet sind. Durch das Hintereinanderschalten mehrerer Vorrichtungen kann die bauliche Höhe der einzelnen Vorrichtungen reduziert werden. Darüber hinaus führt das Hintereinanderschalten der erfindungsgemäßen Vorrichtungen zu einem verlängerten Würzekochprozess, falls dies erwünscht ist. Es können auch unterschiedliche Phasen der Würzekochung wie Aufheizen, Kochen sowie Strippen (Ausdampfen unerwünschter Aromastoffe) in den mehreren Vorrichtungen durchgeführt werden.

Es kann auch vor der Vorrichtung zum kontinuierlichen Würzekochen eine zusätzliche Heizeinrichtung, z.B. ein Plattenwärmetauscher, vorgesehen werden, die die Würze, bevor sie über die kaskadenartig übereinander angeordneten Heizflächen geleitet wird, aufheizt. Somit ergibt sich ein besonders effizienter, schneller Würzekochprozess.

Es ist auch möglich, dass nach der Vorrichtung zum kontinuierlichen Würzekochen ein Tank zwischen oder nachgeschaltet ist, beispielsweise ein Schichtenspeicher, in den die Würze kontinuierlich geleitet und kontinuierlich entnommen wird. Durch die Verweilzeit im Tank kann die Temperatur der gekochten Würze noch weiter auf erhöhtem Niveau gehalten werden, so dass Vorgänge, wie beispielsweise Lösung und Umwandlung von Hopfenbestandteilen, Bildung und Ausscheidung von Eiweiß- Gerbstoffverbindungen, etc. fortgesetzt werden können.

Bei dem erfindungsgemäßen Verfahren wird die Würze kontinuierlich über mehrere kaskadenartig übereinander angeordnete im Wesentlichen konisch zulaufende Heizflächen geleitet und erhitzt. Die Würze kann daher großflächig über die Heizflächen geleitet werden, was konstruktiv und verfahrenstechnisch insgesamt zu einem einfachen Gesamtwürzekochprozess führt. Es kann vorteilhaft sein, wenn die Würze an unterschiedlichen Heizflächen auf unterschiedliche Temperaturen gebracht wird, so dass beispielsweise eine Aufheizphase und eine Kochphase in einer Vorrichtung durchgeführt werden können. ,

Es ist möglich, dass die Würze an den Heizflächen bei Normaldruck in der Vorrichtung auf atmosphärische Kochtemperaturen von 97 - 100°C, bei Unterdruck auf eine Temperatur von 88 - 92°C und bei Überdruck auf Temperaturen bis zu 110°C gebracht wird.

Vorteilhafter Weise kann die Würze jedoch, bevor sie über die Heizflächen geleitet wird, von einer separaten Würzeheizeinrichtung auf eine Temperatur von 72 - 99°C geheizt werden, wodurch sich ein besonders effektiver Prozess ergibt.

Gemäß einer bevorzugten Ausführungsart wird der Würze zum Kochprozess ein isomerisiertes Hopfenprodukt und/oder ein herkömmliches Hopfenprodukt zugeführt Bei einem isomerisierten Hopfenprodukt kann die Kochzeit deutlich reduziert werden.

Die abgeleitete Würze kann entweder kontinuierlich zur Heißtrubabscheidung weitergeleitet werden oder aber kontinuierlich mindestens einer weiteren Vorrichtung mit mehreren kaskadenartig übereinander angeordneten Heizflächen und z. B: dann erst zur Trubabscheidung geleitet werden.

Gemäß der vorliegenden Erfindung ist es möglich, dass die Temperatur des Heizmediums höchstens 104 - 120°C beträgt. Dadurch können Energiespitzen vermieden werden und die Würze besonders schonend behandelt werden.

Die Erfindung wird nachfolgend unter Bezugnahme folgender Figuren erläutert:
- Fig. 1: zeigt grobschematisch einen Schnitt durch eine erfindungsgemäße Vorrichtung zum Würzekochen.
- Fig. 2: zeigt grobschematisch einen Schnitt durch eine Heizfläche und eine Leiteinrichtung gemäß einer Ausführungsform.
- Fig. 3: zeigt grobschematisch einen Schnitt durch eine Heizfläche und eine Leiteinrichtung gemäß einer weiteren Ausführungsform.
- Fig. 4: zeigt grobschematisch ein Würzekochsystem mit mehreren in Reihe geschalteten Vorrichtungen zum Kochen von Würze.
- Fig. 5: zeigt grobschematisch ein Würzekochsystem mit einer zusätzlichen Heizeinrichtung und einem Tank

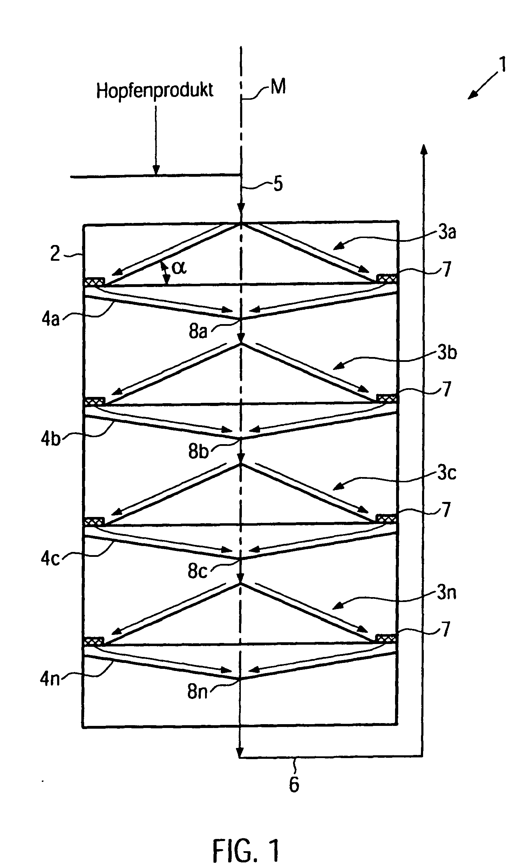

Fig. 1 zeigt grobschematisch einen Schnitt durch eine erfindungsgemäße Vorrichtung zum Würzekochen. Die Vorrichtung weist einen Zulauf 5 für Läuterwürze auf, der vorzugsweise ein isomerisiertes Hopfenprodukt z.B. Extrakt und /oder ein übliches Hopfenprodukt zugeführt wird. In dem Gehäuse 2, das vorzugsweise hohlzylindrisch ausgebildet ist, befinden sich kaskadenartig übereinander angeordnete Heizflächen 3a bis 3n. Die Heizflächen sind hier als konisch zulaufend als Kegelflächen ausgebildet, deren Spitze nach oben weist. Um die Heizflächen 3 zu beheizen, können diese als doppelwandiger Schirm ausgebildet sein, durch dessen Innenraum z.B. Heißdampf oder ein Wärmetauschermedium z.B. Wasser oder Hochdruckheißwasser leitbar ist. Dazu kann die Heizfläche einen nicht dargestellten entsprechenden Ein- und Auslauf für das Wärmetauschermedium aufweisen. Die unterschiedlichen übereinander angeordneten Heizflächen 3a bis 3n können entweder an einem gemeinsamen Heizkreislauf angeschlossen sein oder aber auf unterschiedliche Temperaturen bzw. Drücke heizbar sein. Dann können in einer Vorrichtung unterschiedliche Phasen der Würzekochung wie Aufheizen, Kochen mit oder ohne Strippen durchgeführt werden.

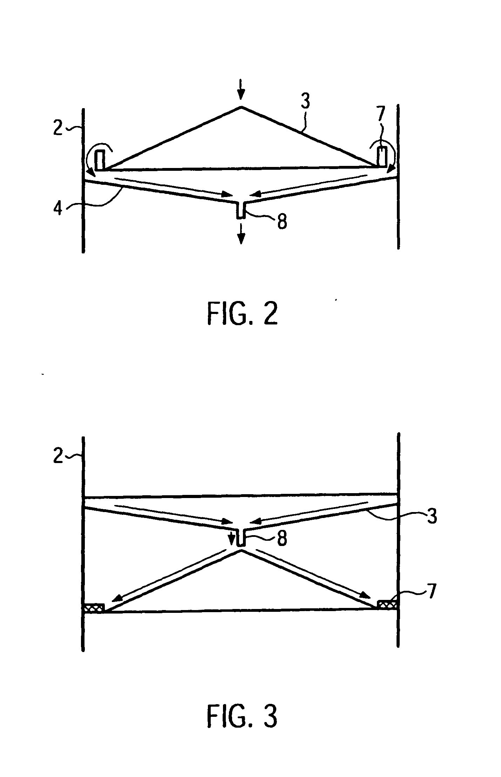

Bei dieser Ausführungsform befindet sich im unteren Bereich der Heizflächen 3 jeweils ein Pufferbereich 7, der hier als umlaufende Rinne ausgebildet ist. Aus diesem Pufferbereich 7 kann dann die Würze wie durch die Pfeile dargestellt ist, über eine Leiteinrichtung 4 zur nächsten darunter angeordneten Heizfläche 3b geleitet werden. Dazu können im Pufferbereich 7 beispielsweise Öffnungen ausgebildet sein. Wie insbesondere in Fig. 2 dargestellt ist, kann der Pufferbereich auch als Überlauf ausgebildet sein, über den die Würze bei einer bestimmten Füllhöhe zur Leiteinrichtung 4 fließt. Die Leiteinrichtung 4 ist hier ebenfalls als konisch nach unten zulaufende Fläche ausgebildet, in deren Mitte sich beispielsweise eine Öffnung 8 befindet, über die die Würze direkt oder über einen Rohrstutzen (nicht gezeigt) zur Mitte M des Gehäuses 2 auf die darunter liegende Heizfläche 3b geleitet wird. Es ist möglich, dass auch die Leiteinrichtung 4 beheizbar ist, um so die Würze zusätzlich zu erhitzen. Dabei kann auch die Leiteinrichtung 4 als doppelwandiger Schirm ausgebildet werden.

Der Winkel α der Heizfläche 3 zu einer Horizontalen liegt etwa zwischen 4 und 45 Grad. Je flacher die Heizfläche verläuft, desto größer die Verweilzeit der Würze in der Vorrichtung.

Die Heizflächen 3, sowie die Leiteinrichtungen 4 sind über nicht gezeigte Befestigungselemente am Gehäuse 2 befestigt.

In Fig. 1 sind die Spitzen der konischen Heizflächen 3 nach oben gewandt, so dass die Würze auf der Außenfläche nach unten z.B. zum Puffer 7 hinläuft. Es ist jedoch auch möglich, dass wie aus Fig. 3 hervorgeht, die Heizflächen 3 derart angeordnet sind, dass die Spitze nach unten d.h. in Richtung Würzeauslauf 6 hinweist, wobei die Heizfläche 3 dann in der Mitte eine Öffnung aufweist, über die die Würze dann zur Leiteinrichtung 4 fließt, die hier ebenfalls als vorzugsweise beheizte Kegelfläche ausgebildet ist und auch einen entsprechenden umlaufenden Puffer 7 aufweisen kann. Die Würze fließt dann zur nächsten Heizfläche 3. Die in Fig. 3 gezeigte Heizfläche und Leiteinrichtung wechseln sich dann ab.

Vorzugsweise sind mindestens 2 Heizflächen übereinander angeordnet, um eine ausreichende Wärmezufuhr sicherzustellen.

Die Vorrichtung 1 kann auch eine nicht gezeigte Ableitung für Brüdendampf aufweisen.

Die Vorrichtung weist ferner einen Würzeablauf 6 auf, über den die gekochte Würze beispielsweise der Heißtrubabscheidung zugeführt werden kann.

Die Vorrichtung weist vorzugsweise ein druckdichtes Gehäuse 2 auf, in dem der Druck über entsprechende nicht dargestellte Einrichtungen, wie z. B. eine Pumpe, Druckmesser, Ventile einstellbar ist. Der Druck kann dabei auf einen Unterdruck , Normaldruck oder Überdruck gebracht werden. Es ist möglich, dass die Würze an den Heizflächen bei Normaldruck in der Vorrichtung auf Temperaturen von 97 - 100°C, bei Unterdruck auf eine Temperatur von 88 - 92°C und bei Überdruck auf Temperaturen bis zu 110°C gebracht wird.

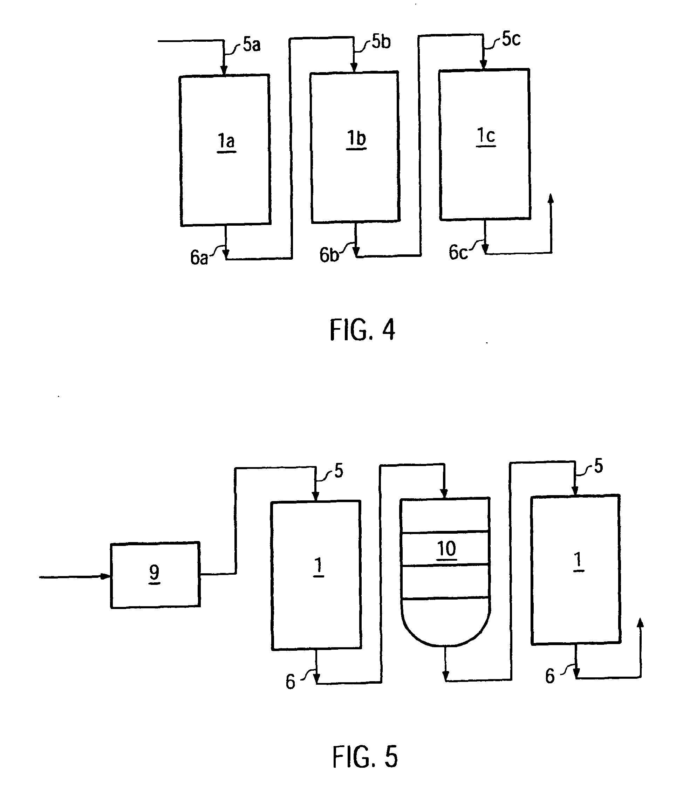

Wie insbesondere aus Fig. 4 hervorgeht, können auch mehrere, hier 3, Vorrichtungen 1a, b, c hintereinander geschaltet sein. Dabei wird die über den Auslass 6a abgeleitete Würze dem Würzezulauf 5b der nachfolgenden Vorrichtung zugeführt. Somit kann beispielsweise die Würze in den unterschiedlichen Vorrichtungen auf eine unterschiedliche Temperatur aufgeheizt werden. In einer ersten Phase in der Vorrichtung 1a wird die Würze z.B. aufgeheizt. In einer weiteren Vorrichtung 1 b wird die Würze in einer zweiten Phase gekocht und in einer dritten Vorrichtung 1c können dann in einer dritten Phase beispielsweise Aromastoffe wie DMS ausdampfen.

Die Temperaturen , auf die die Würze geheizt wird hängt wie zuvor beschrieben vom Druck in der Vorrichtung ab und ist an die bestimmte Phase angepasst..

Es ist beispielsweise auch möglich , dass in einer Vorrichtung 1 die Würze unter erhöhtem Druck z.B. 2 bar über die Heizflächen 3 geleitet wird und dann in einer nachfolgend angeordneten Einrichtung eine Entspannung bei Normaldruck oder Unterdruck stattfindet. Diese nachgeordnete Einrichtung kann dann z.B. wieder eine Vorrichtung 1 mit kaskadenartig übereinander angeordneten Heizflächen sein.

Wenn auch nicht dargestellt, können auch mehrere Vorrichtungen parallel geschaltet werden.

Fig. 5 zeigt eine weitere Ausführungsform gemäß der vorliegenden Erfindung. Hier umfasst das Würzekochsystem eine Würzeheizung 9, die zum kontinuierlichen Erwärmen der Würze auf etwa 72 - 99°C vorgesehen ist. Eine solche Einrichtung kann beispielsweise durch einen Plattenwärmetauscher realisiert werden. Im Anschluss wird die Würze kontinuierlich einer ersten Vorrichtung 1 zum kontinuierlichen Würzekochen zugeführt, die mehrere kaskadenartig übereinander angeordnete, im Wesentlichen konisch zulaufende Heizflächen aufweist. Durch die Heizflächen 3 wird der Würze hier weiter Wärme zugeführt. Über den Würzeablauf 6 wird die Würze hier kontinuierlich einem Tank 10 zugeführt, der hier in Form eines Schichtenspeichers realisiert ist. Die Verweilzeit in diesem Schichtenspeicher beträgt etwa 15 bis 30, vorzugsweise 20 Minuten. Am unteren Ende des Schichtenspeichers wird die Würze entnommen und kann erneut einer Vorrichtung 1 mit kaskadenartig übereinander angeordneten im Wesentlichen konisch zulaufenden Heizflächen 3 zugeleitet werden, so dass die Würze in Bewegung versetzt wird, damit Würzeinhaltsstoffe wie Eiweiß- und Gerbstoffverbindungen ausfallen und unerwünschte Aromastoffe ausdampfen können. Die fertig gekochte Würze kann dann zu einer Einrichtung zur Heißtrubabscheidung geleitet werden.

Gemäß dem erfindungsgemäßen Verfahren wird also die Würze der Vorrichtung 1 zum Würzekochen kontinuierlich zugeführt und kontinuierlich über die Heizflächen geleitet, wobei gleichzeitig die Würze die Einrichtung 1 kontinuierlich über den Ablauf 6 verlässt.

Durch die großen Heizflächen kann die Heiztemperatur des Wärmetauschermediums im Vergleich zum herkömmlichen Würzekochen auf 104 - 120°C reduziert werden. Dadurch, dass der Einrichtung zum Würzekochen kontinuierlich Wärme zugeführt wird, können Leistungsspitzen wie bei herkömmlichen Würzepfannen vermieden werden. Darüber hinaus entfällt die Rüstzeit, so dass die Prozesszeit optimiert werden kann. Besonders vorteilhaft ist der Einsatz von isomerisiertem Hopfenextrakt, da hier die Kochzeit erheblich verringert werden kann.

## Patentansprüche

1. Vorrichtung (1) zum kontinuierlichen Würzekochen mit:
einem Würzezulauf (5),
mehreren kaskadenartig übereinander angeordneten im Wesentlichen konisch zulaufenden Heizflächen (3),
mehreren Leiteinrichtungen (4), die die Würze von einer Heizfläche (3) zur darunterliegenden leiten, sowie
einen Würzeablauf (6).

2. Vorrichtung nach mindestens Anspruch 1, **dadurch gekennzeichnet, dass** der Druck in der Vorrichtung (1) einstellbar ist.

3. Vorrichtung nach Anspruch 1 oder 2 **dadurch gekennzeichnet, dass** die Leiteinrichtungen (4) beheizbar sind.

4. Vorrichtung nach mindestens einem der Ansprüche 1 bis 3, **dadurch gekennzeichnet, dass** die Leiteinrichtungen (4) als im wesentlichen konisch zulaufende Fläche ausgebildet sind.

5. Würzekochsystem, bei dem mindestens zwei Vorrichtungen (1a, b, c) nach mindestens einem der Ansprüche 1 bis 4 in Reihe oder parallel geschaltet sind.

6. Würzekochsystem nach Anspruch 5, **dadurch gekennzeichnet, dass** vor der Vorrichtung (1) zum kontinuierlichen Würzekochen eine Würzeaufheizeinrichtung (9) vorgesehen ist.

7. Würzekochsystem nach Anspruch 5 oder 6, **dadurch gekennzeichnet, dass** der Vorrichtung (1) ein Tank (10) nachgeschaltet ist.

8. Verfahren zum kontinuierlichen Würzekochen, wobei die Würze kontinuierlich über mehrere kaskadenartig übereinander angeordnete, im Wesentlichen konisch zulaufende Heizflächen (3) geleitet und erhitzt wird.

9. Verfahren nach Anspruch 8, **dadurch gekennzeichnet, dass** die Würze an den Heizflächen bei Normaldruck in der Vorrichtung auf Temperaturen von 97 - 100°C, bei Unterdruck auf eine Temperatur von 88 - 92°C und bei Überdruck auf Temperaturen bis zu 110°C gebracht wird.

10. Verfahren nach Anspruch 8 oder 9, **dadurch gekennzeichnet, dass** die abgeleitete Würze kontinuierlich zur Heißtrubabscheidung weitergeleitet wird oder kontinuierlich mindestens einer weiteren Vorrichtung mit mehreren kaskadenartig übereinander angeordneten Heizflächen (3) geleitet wird.

11. Verfahren nach mindestens einem der Ansprüche 8 bis 10, **dadurch gekennzeichnet, dass** die Würze bevor sie über die Heizflächen (3) geleitet wird, auf eine Temperatur von72 - 99°C geheizt wird.

12. Verfahren nach mindestens einem der Ansprüche 8 bis 11, **dadurch gekennzeichnet, dass** die Würze, nachdem sie über die Heizflächen (3) geleitet wurde, in einen Tank (10) geleitet wird.

13. Verfahren nach mindestens einem der Ansprüche 8 bis 12, **dadurch gekennzeichnet, dass** der Würze herkömmliche Hopfenprodukte und / oder isomerisierte Hopfenprodukte zugeführt werden.

14. Verfahren nach mindestens einem der Ansprüche 8 bis 13 , **dadurch gekennzeichnet, dass** die Temperatur des Heizmediums höchstens 104 - 120°C beträgt.

## Claims

1. Apparatus (1) for continuously boiling wort having:
a wort inlet (5),
a plurality of essentially tapered heating surfaces (3) arranged cascade-like one above the other,
a plurality of guiding devices (4), which guide the wort from one heating surface (3) to the one situated below it, and
a wort outlet (6).

2. Apparatus according to at least Claim 1, **characterised in that** the pressure in the apparatus (1) can be adjusted.

3. Apparatus according to Claim 1 or 2, **characterised in that** the guiding devices (4) can be heated.

4. Apparatus according to at least one of Claims 1 to 3, **characterised in that** the guiding devices (4) are formed as essentially tapered surfaces.

5. Wort boiling system, in which at least two apparatuses (1a, b, c) according to at least one of Claims 1 to 4 are connected in series or in parallel.

6. Wort boiling system according to Claim 5, **characterised in that** a wort heating device (9) is provided in front of the apparatus (1) for continuously boiling wort.

7. Wort boiling system according to Claim 5 or 6, **characterised in that** a tank (10) is connected downstream of the apparatus (1).

8. Method for continuously boiling wort, wherein the wort is continuously guided and heated over a plurality of essentially tapered heating surfaces (3) arranged cascade-like one above the other.

9. Method according to Claim 8, **characterised in that** the wort on the heating surfaces at normal pressure in the apparatus is brought to temperatures of 97-100°C, at low pressure to a temperature of 88-92°C and at overpressure to temperatures up to 110°C.

10. Method according to Claim 8 or 9, **characterised in that** the derived wort is continuously conveyed for hot trub separation or continuously guided to at least one further apparatus having a plurality of heating surfaces (3) arranged cascade-like one above the other.

11. Method according to at least one of Claims 8 to 10, **characterised in that** the wort is heated to a temperature of 72-99°C before it is guided over the heating surfaces (3).

12. Method according to at least one of Claims 8 to 11, **characterised in that** the wort is guided into a tank (10) after it has been guided over the heating surfaces (3).

13. Method according to at least one of Claims 8 to 12, **characterised in that** conventional hop products and/or isomerised hop products are added to the wort.

14. Method according to at least one of Claims 8 to 13, **characterised in that** the temperature of the heating medium is at most 104-120°C.

## Revendications

1. Dispositif (1) pour la cuisson du moût en continu, avec :
une amenée de moût (5),
plusieurs surfaces chauffantes (3) superposées en cascade et globalement effilées en cône,
plusieurs dispositifs de guidage (4) qui guident le moût d'une surface chauffante (3) vers celle du dessous, et
un écoulement de moût (6).

2. Dispositif selon au moins la revendication 1, **caractérisé en ce que** la pression dans le dispositif (1) est réglable.

3. Dispositif selon la revendication 1 ou 2, **caractérisé en ce que** les dispositifs de guidage (4) sont aptes à être chauffés.

4. Dispositif selon l'une au moins des revendications 1 à 3, **caractérisé en ce que** les dispositifs de guidage (4) sont conçus comme une surface de guidage globalement effilée en cône.

5. Système de cuisson de moût dans lequel au moins deux dispositifs (1a, b, c) selon l'une au moins des revendications 1 à 4 sont montés en ligne ou en parallèle.

6. Système de cuisson de moût selon la revendication 5, **caractérisé en ce qu'**il est prévu, avant le dispositif (1) pour la cuisson du moût en continu, un dispositif de chauffage de moût (9).

7. Système de cuisson de moût selon la revendication 5 ou 6, **caractérisé en ce qu'**une cuve (10) est montée en aval du dispositif (1).

8. Procédé pour la cuisson du moût en continu, étant précisé que le moût est guidé et chauffé en continu par l'intermédiaire de plusieurs surfaces chauffantes (3) superposées en cascade et globalement effilées en cône.

9. Procédé selon la revendication 8, **caractérisé en ce que** le moût est porté, sur les surfaces chauffantes, à des températures de 97-100°C en présence d'une pression normale dans le dispositif, à une température de 88-92° en présence d'une dépression, et à des températures allant jusqu'à 110°C, en présence d'une surpression.

10. Procédé selon la revendication 8 ou 9, **caractérisé en ce que** le moût évacué est redirigé en continu vers une séparation du trouble chaud ou est dirigé en continu au moins vers un autre dispositif avec plusieurs surfaces chauffantes (3) superposées en cascade.

11. Procédé selon l'une au moins des revendication 8 à 10, **caractérisé en ce que** le moût, avant d'être guidé par l'intermédiaire des surfaces chauffantes (3), est chauffé à une température de 72-99°C.

12. Procédé selon l'une au moins des revendications 8 à 11, **caractérisé en ce que** le moût, après avoir être guidé par l'intermédiaire des surfaces chauffantes (3), est amené dans une cuve (10).

13. Procédé selon l'une au moins des revendications 8 à 12, **caractérisé en ce que** des produits de houblon classiques et/ou des produits de houblon isomérisés sont amenés sur le moût.

14. Procédé selon l'une au moins des revendications 8 à 13, **caractérisé en ce que** la température de l'agent chauffant est au maximum de 104-120°C.
